# EUROPEAN PATENT APPLICATION

(11) **EP 3 907 680 A1**
(43) Date of publication of application: **10.11.2021**
(21) Application number: 19906631.7
(22) Date of filing: 26.12.2019
(51) Int. Cl.: G06Q 10/08

(54) **MATERIAL ASSIGNMENT METHOD AND SYSTEM, AND COMPUTER DEVICE READABLE STORAGE MEDIUM**

(30) Priority: 02.01.2019 CN 201910002566
(71) Applicant: BOE TECHNOLOGY GROUP CO., LTD., Beijing 100015 (CN)
(72) Inventor: LIU, Yunxia, Beijing 100176 (CN); SUI, Na, Beijing 100176 (CN); LUO, Jiangbo, Beijing 100176 (CN); WANG, Jieli, Beijing 100176 (CN); HU, Zhenggang, Beijing 100176 (CN); FAN, Zhengfang, Beijing 100176 (CN)
(74) Representative: Cohausz & Florack
(86) International application number: PCT/CN2019/128899
(87) International publication number: WO 2020/140831

(57) **Abstract**

A material assignment method and system, and a computer device readable storage medium. The material assignment method comprises: obtaining the product structure and a list of target processes associated with the product structure, the product structure comprising information of materials required for manufacturing a product; the list of target processes comprising information of operation steps of procedures required for manufacturing the product (S101); automatically generating, according to the obtained product structure and list of target processes associated with the product structure, materials required to be assigned to the operation steps during product manufacturing by a preset rule to generate a list of material assignment processes of the product (S102); and generating, according to the generated list of material assignment processes of the product, an operation instruction of the product (S103).

## Description

The present application claims the priority of Chinese patent application No. 201910002566.0, filed with China National Intellectual Property Administration on January 02, 2019, and entitled "Material Assignment Method and System and Computer Equipment Readable Storage Medium", the contents of which are incorporated by reference herein in its entirety.

### Field

The present disclosure relates to the technical field of material assignment, in particular to a material assignment method and system and a computer equipment readable storage medium.

### Background

At present, the production processes in the liquid crystal display field are based on an offline standard operating procedure (SOP). A technologist compiles the SOP of an Excel version or a Word version, and manually fills in material codes in the SOP, while materials are established in a system and have different versions. Manual material assignment has the following shortcomings: 1. The material number is filled in incorrectly, then a wrong material is requisitioned or no material can be requisitioned. When a wrong material is used in production, the quantity in stock will be incorrect, and the production cost calculation is unreasonable; and when no material can be requisitioned, production on a production line will be suspended; 2. when a wrong material amount is filled in, more materials or less materials may be requisitioned. When more materials are requisitioned, economical burden of an enterprise will be increased, and when less materials are requisitioned, the production of a production line will be influenced; 3. when materials are updated, new and old materials may be mixed in case of no timely update and display; and 4. the time spent in manually assigning materials will be longer than the time spent in automatically assigning materials, automatic assignment of materials cannot be realized, meanwhile, repeated examinations are required to confirm no existence of mistakes, then the workload is invisibly increased. In summary, in the related technology, manual assignment of materials is large in workload and low in efficiency, and will lead to inconsistency between the materials in the SOP and the materials established in a system, thereby leading to such conditions as wrong filled-in material number, wrong material amount, wrong material version, and mismatching between the online material number and the material number in the SOP, seriously influencing production of the production line, and leading to a reduction in production capacity and yield.

### Summary

Embodiments of the present disclosure provide a material assignment method and system and a computer equipment readable storage medium, with specific solutions as follows.

An embodiment of the present disclosure provides a material assignment method performed by computer equipment. The method includes:
acquiring a product structure and a target process list associated with the product structure, the product structure including identifications of materials required for manufacturing a product, and the target process list including operating steps of processes required in manufacturing the product;
generating a material assignment process list of the product by automatically obtaining materials required to be assigned to respective operating steps in the processes of manufacturing the product based on a preset rule and according to the product structure and the target process list associated with the product structure; and
generating a standard operating procedure of the product according to the material assignment process list of the product.

In some embodiments, said generating a material assignment process list of the product by automatically obtaining materials required to be assigned to respective operating steps in the processes of manufacturing the product based on a preset rule and according to the product structure and the target process list associated with the product structure includes:
determining in sequence corresponding relationships between the respective operating steps in the target process list and identifications of materials based on a set sequence and according to the target process list associated with the product structure and corresponding relationships between preset operating steps and identifications of materials;
taking the corresponding relationships between the respective operating steps in the target process list and identifications of materials as an initial assignment list of the product;
determining whether an identification of any material corresponding to an operating step in the initial assignment list is same as an identification of the any material comprised in the product structure; and
taking the initial assignment list as the material assignment process list of the product in response to that the identification of any material corresponding to an operating step in the initial assignment list is the same as the identification of the any material comprised in the product structure.

In some embodiments, the material assignment process list of the product is generated by updating the initial assignment list in response to that the identification of any material corresponding to an operating step in the initial assignment list is different from the identification of the any material comprised in the product structure.

In some embodiments, after generating the initial assignment list of the product, the method further includes:
determining whether an identification of a material in the product structure is not in the initial assignment list;
determining a corresponding operating step assigning the material in the target process list in response to that the identification of the material in the product structure is not in the initial assignment list; and
generating the material assignment process list of the product by adding a corresponding relationship between the identification of the material and the corresponding operating step in the initial assignment list.

In some embodiments, the method further includes: updating the corresponding relationships between preset operating steps and identifications of materials based on the corresponding relationship between the identification of the material and the corresponding operating step.

In some embodiments, each operating step comprises a site of the operating step in a production line; and each corresponding relationship between a preset operating step and an identification of a material comprises a corresponding relationship between a site of the preset operating step in the production line and the identification of the material;
said determining in sequence corresponding relationships between the respective operating steps in the target process list and identifications of materials based on a set sequence and according to the target process list associated with the product structure and corresponding relationships between preset operating steps and identifications of materials comprises:
determining in sequence corresponding relationships between sites of the respective operating steps in the target process list in the production line and identifications of materials based on a set sequence and according to the target process list associated with the product structure and corresponding relationships between sites of preset operating steps in the production line and identifications of materials, thereby automatically assigning a material in the product structure to a site of an operating step in the production line corresponding to the material.

In some embodiments, the acquiring the product structure and the target process list associated with the product structure includes:
acquiring manufacturing resources and process files;
creating an initial process list comprising process information and operating step information required for manufacturing the product; and
associating the product structure, the process file and the manufacturing resources to the initial process list, to obtain the target process list.

In some embodiments, the method further includes:
distributing the standard operating procedure to a production line, and distributing the materials to the production line according to the standard operating procedure; and
determining whether the materials distributed to the production line are consistent with materials requisitioned in the production line by scanning a two-dimensional code of the materials distributed to the production line.

Correspondingly, an embodiment of the present disclosure further provides a material assignment system including a processor; the processor contains a production execution system; and the production execution system performs the following method when being executed by the processor:
acquiring a product structure and a target process list associated with the product structure, the product structure including identifications of materials required for manufacturing a product, and the target process list including operating steps of processes required in manufacturing the product;
generating a material assignment process list of the product by automatically obtaining materials required to be assigned to respective operating steps in the processes of manufacturing the product based on a preset rule and according to the product structure and the target process list associated with the product structure; and
generating a standard operating procedure of the product according to the material assignment process list of the product.

In some embodiments, said generating a material assignment process list of the product by automatically obtaining materials required to be assigned to respective operating steps in the processes of manufacturing the product based on a preset rule and according to the product structure and the target process list associated with the product structure includes:
determining in sequence corresponding relationships between the respective operating steps in the target process list and identifications of materials based on a set sequence and according to the target process list associated with the product structure and corresponding relationships between preset operating steps and identifications of materials;
taking the corresponding relationships between the respective operating steps in the target process list and identifications of materials as an initial assignment list of the product;
determining whether an identification of any material corresponding to an operating step in the initial assignment list is same as an identification of the any material comprised in the product structure; and
taking the initial assignment list as the material assignment process list of the product in response to that the identification of any material corresponding to an operating step in the initial assignment list is the same as the identification of the any material comprised in the product structure.

In some embodiments, the material assignment process list of the product is generated by updating the initial assignment list in response to that the identification of any material corresponding to an operating step in the initial assignment list is different from the identification of the any material comprised in the product structure.

In some embodiments, after generating the initial assignment list of the product, the method performed by the processor further includes:
determining whether an identification of a material in the product structure is not in the initial assignment list;
determining a corresponding operating step assigning the material in the target process list in response to that the identification of the material in the product structure is not in the initial assignment list; and
generating the material assignment process list of the product by adding a corresponding relationship between the identification of the material and the corresponding operating step in the initial assignment list.

In some embodiments, the method performed by the processor further includes: updating the corresponding relationships between preset operating steps and identifications of materials based on the corresponding relationship between the identification of the material and the corresponding operating step.

In some embodiments, each operating step comprises a site of the operating step in a production line; and each corresponding relationship between a preset operating step and an identification of a material comprises a corresponding relationship between a site of the preset operating step in the production line and the identification of the material;
said determining in sequence corresponding relationships between the respective operating steps in the target process list and identifications of materials based on a set sequence and according to the target process list associated with the product structure and corresponding relationships between preset operating steps and identifications of materials comprises:
determining in sequence corresponding relationships between sites of the respective operating steps in the target process list in the production line and identifications of materials based on a set sequence and according to the target process list associated with the product structure and corresponding relationships between sites of preset operating steps in the production line and identifications of materials, thereby automatically assigning a material in the product structure to a site of an operating step in the production line corresponding to the material.

In some embodiments, the acquiring the product structure and the target process list associated with the product structure includes:
acquiring manufacturing resources and process files;
creating an initial process list comprising process information and operating step information required for manufacturing the product; and
associating the product structure, the process file and the manufacturing resources to the initial process list, to obtain the target process list.

In some embodiments, the method performed by the processor further includes:
distributing the standard operating procedure to a production line, and distributing the materials to the production line according to the standard operating procedure; and
determining whether the materials distributed to the production line are consistent with materials requisitioned in the production line by scanning a two-dimensional code of the materials distributed to the production line.

Correspondingly, an embodiment of the present disclosure further provides a non-transitory computing equipment readable storage medium, the medium is stored with computer program codes, when the program codes run on computing equipment, the program codes are configured to enable the computing equipment to perform the steps according to the above method.

### Brief Description of the Drawings

In order to more clearly illustrate technical solutions in embodiments of the present disclosure, a brief introduction will be given below on accompanying drawings which need to be used in the description of the embodiments. Apparently, the accompanying drawings described below are merely some embodiments of the present disclosure. Those skilled in the art can obtain other accompanying drawings according to these drawings without any creative effort.
Fig. 1 is a flow diagram of a material assignment method provided according to an embodiment of the present disclosure;
Fig. 2 is a a flow diagram for generating the material assignment process list of the product in the material assignment method provided according to an embodiment of the present disclosure;
Fig. 3 is a flow diagram of another material assignment method provided according to an embodiment of the present disclosure;
Fig. 4 is a system structural schematic diagram of a production execution system provided according to an embodiment of the present disclosure.

### Detailed Description of the Embodiments

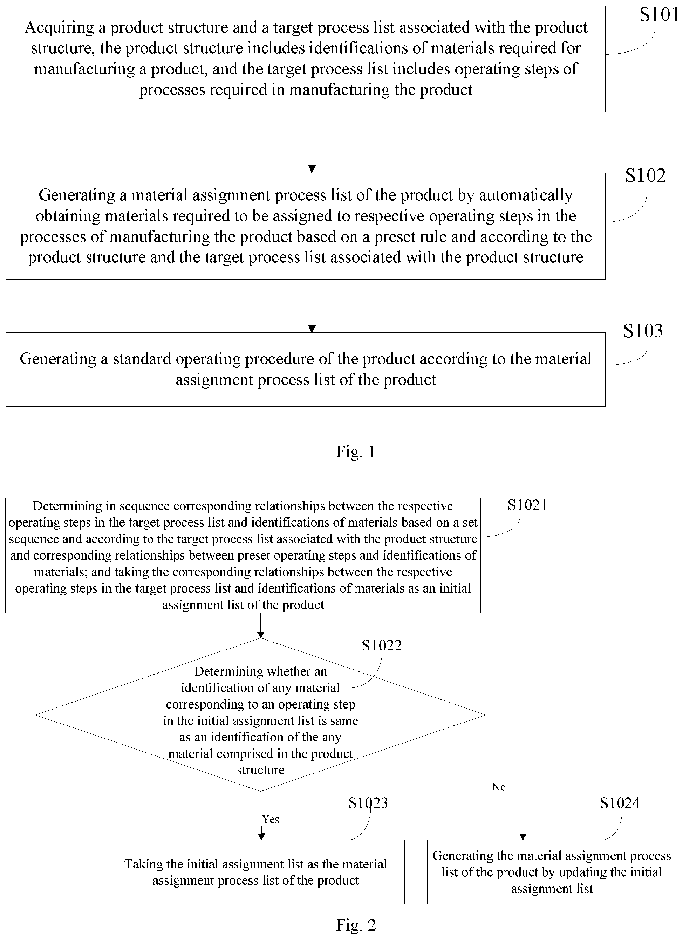

An embodiment of the present disclosure provides a material assignment method, as shown in Fig. 1, the method includes:
S101, acquiring a product structure and a target process list associated with the product structure, wherein the product structure comprises identifications of materials required for manufacturing a product, and the target process list comprises operating steps of processes required in manufacturing the product;
S102, generating a material assignment process list of the product by automatically obtaining materials required to be assigned to respective operating steps in the processes of manufacturing the product based on a preset rule and according to the product structure and the target process list associated with the product structure; and
S103, generating a standard operating procedure of the product according to the material assignment process list of the product.

In the material assignment method provided in an embodiment of the present disclosure, after the product structure and the target process list associated with the product structure are acquired, materials required to be assigned to respective operating steps in the processes of manufacturing the product are automatically obtained based on a preset rule and according to the acquired product structure and the target process list associated with the product structure, so as to generate the material assignment process list of the product. The standard operating procedure of the product is generated according to the generated material assignment process list of the product, thereby ensuring that the subsequently generated identifications of materials in the standard operating procedure of the product is consistent with identifications of materials in the product structure, avoiding an influence of errors of manual material assignment on production of production lines, improving the efficiency in material assignment, and further improving productivity and manufacturing yield of products.

It should be noted that, in an embodiment of the present disclosure, a process is working steps required for manufacturing a product, the manufacturing of a product requires one or more processes, while one process is composed of one or more operating steps.

Optionally, in step S102, as shown in Fig. 2, said generating a material assignment process list of the product by automatically obtaining materials required to be assigned to respective operating steps in the processes of manufacturing the product based on a preset rule and according to the product structure and the target process list associated with the product structure includes:
S1021, determining in sequence corresponding relationships between the respective operating steps in the target process list and identifications of materials based on a set sequence and according to the target process list associated with the product structure and corresponding relationships between preset operating steps and identifications of materials; and taking the corresponding relationships between the respective operating steps in the target process list and identifications of materials as an initial assignment list of the product;
S1022, determining whether an identification of any material corresponding to an operating step in the initial assignment list is same as an identification of the any material comprised in the product structure; and
if the identification of any material corresponding to an operating step in the initial assignment list is the same as the identification of the any material comprised in the product structure, then step S1023 is performed;
S1023, taking the initial assignment list as the material assignment process list of the product.

In this way, the material assignment method provided in an embodiment of the present disclosure can avoid mistakes made in manually determining the corresponding relationship between operating steps and materials and manually assigning materials, thereby improving productivity and manufacturing yield of the product.

It should be noted that, in embodiments of the present disclosure, each material is marked with its own unique identification. In the material assignment method provided in embodiments of the present disclosure, materials are automatically assigned by utilizing the identifications of materials, only when an identification of a material corresponding to an operating step in the target process list is the same as an identification of the material in the product structure, all the material with the identification in the product structure is assigned to the operating step corresponding to the material, thereby ensuring accuracy in automatic assignment of materials.

Optionally, said determining in sequence corresponding relationships between the respective operating steps in the target process list and identifications of materials based on a set sequence and according to the target process list associated with the product structure and corresponding relationships between preset operating steps and identifications of materials in step S1021 includes:
based on the set sequence, for each of the operating steps in the target process list, comparing the name of the operating step in the target process list with names of preset operating steps in the corresponding relationships between the preset operating steps and the identifications of the materials, and when the name of the operating step is same as a name of a preset operating step, determining an identification of a material corresponding to the preset operating step as an identification of the material corresponding to the operating step.

In some embodiments, when the object which needs to be assigned with materials is the product structure, optionally, the based on the set sequence, for each of the operating steps in the target process list, comparing the name of the operating step in the target process list with names of preset operating steps in the corresponding relationships between the preset operating steps and the identifications of the materials, and when the name of the operating step is same as a name of a preset operating step, determining an identification of a material corresponding to the preset operating step as an identification of the material corresponding to the operating step includes:
selecting a target process list, traversing the processes and operating steps in the target process list, and comparing a name of an operating step in the target process list with names of preset operating steps in the corresponding relationships between the preset operating steps and identifications of materials, when the name of the operating step is same as a name of a preset operating step, determining an identification of a material corresponding to the operating step in the process, and storing the name of the operating step and the identification of the material corresponding to the operating step in a preset storage structure, until all the operating steps in the target process list are traversed.

In some embodiments, when the object which needs to be assigned with materials is one process in the product structure, optionally, based on the set sequence, for each of the operating steps in the target process list, comparing the name of the operating step in the target process list with names of preset operating steps in the corresponding relationships between the preset operating steps and the identifications of the materials, and when the name of the operating step is same as a name of a preset operating step, determining an identification of a material corresponding to the preset operating step as an identification of the material corresponding to the operating step includes:
selecting a process of the target process list, traversing the operating steps in the process, and comparing the name of the operating step in the process with names of the preset operating steps in the corresponding relationships between the preset operating steps and identifications of materials, when the name of the operating step is same as a name of a preset operating step, determining an identification of a material corresponding to the operating step in the process, and storing the name of the operating step in the process and the identification of the material corresponding to the operating step in a preset storage structure, until all the operating steps in the process in the target process list are traversed.

In some embodiments, when the object which needs to be assigned with materials is one operating step in the product structure, optionally, the based on the set sequence, for each of the operating steps in the target process list, comparing the name of the operating step in the target process list with names of preset operating steps in the corresponding relationships between the preset operating steps and the identifications of the materials, and when the name of the operating step is same as a name of a preset operating step, determining an identification of a material corresponding to the preset operating step as an identification of the material corresponding to the operating step includes:
selecting an operating step of the target process list, comparing the name of the operating step with names of the preset operating steps in the corresponding relationships between the preset operating steps and identifications of materials, when the name of the operating step is same as a name of a preset operating step, determining an identification of a material corresponding to the operating step, and storing the name of the operating step and the identification of the material corresponding to the operating step in a preset storage structure.

The storage structure can be for example a linked list, and the structure of the linked list for example includes: an identification of a material, a name of an operating step, and a pointer pointing to the next node.

Optionally, after step S1022, as shown in Fig. 2, if an identification of a material corresponding to an operating step in the initial assignment list is different from an identification of the material in the product structure, then step S1024 is performed:
S1024, generating the material assignment process list of the product by updating the initial assignment list.

Specifically, when an identification of a material corresponding to an operating step in the initial assignment list is different from an identification of the material in the product structure, the corresponding relationship between the operating step and the identification of the material in the initial assignment list is modified, such that the material with the identification is not assigned. For example, when an identification of a material is recorded in the initial assignment list, while the identification of the material is not recorded in the product structure, then the corresponding relationship between the identification of the material and the operating step recorded in the initial assignment list is deleted.

Optionally, the method further includes:
determining whether an identification of a material in the product structure is not in the initial assignment list;
determining a corresponding operating step assigning the material in the target process list in response to that the identification of the material in the product structure is not in the initial assignment list; and
generating the material assignment process list of the product by updating the initial assignment list through adding a corresponding relationship between the identification of the material and the corresponding operating step in the initial assignment list.

That is, the material assignment method provided in an embodiment of the present disclosure further includes a step of material reinspection, to further ensure that the material in the product structure is accurately assigned to each operating step in the target process list, prevent leaked materials, wrong materials or mixed materials, and further improve reliability of material assignment.

Optionally, the determining whether unassigned materials exist in the product structure (i.e., determining whether an indentification of a material in the product structure is not in the initial assignment list) includes:
determining whether the material version in the product structure is updated; if the material version in the product structure is updated, then unassigned materials exist in the product structure; if the material version in the product structure is not updated, then no unassigned materials exist in the product structure; and/or
determining whether an operating step, with the name of the operating step being different from the name of the operating step in the product structure, exists in the target process list; if an operating step, with the name of the operating step being different from the name of the operating step in the product structure, exists in the target process list, then unassigned materials exist in the product structure; if an operating step, with the name of the operating step being different from the name of the operating step in the product structure, does not exist in the target process list, then no unassigned materials exist in the product structure; and/or
determining whether preset corresponding relationships exist between identifications of materials in the product structure and operating steps; if no preset corresponding relationship exists between identification(s) of at least one material(s) in the product structure and an operating step, then unassigned materials exist in the product structure; if preset corresponding relationships exist between identifications of all materials in the product structure and operating steps, then no unassigned materials exist in the product structure.

It should be noted that, after materials in the product structure are automatically assigned to respective operating steps corresponding to the materials, the product structure may be updated, that is, the material version in the product structure is updated, in this way, materials should be automatically assigned again to respective operating steps corresponding to the materials which are updated in the material version, thereby avoiding inconsistency between the material in the subsequently generated standard operating procedure and the material version in the current product structure. When the product structure is updated, the updated materials in the material version are marked, to facilitate subsequent assignment of marked materials to corresponding operating steps.

It should be noted that, for the same operating step, a name of the operating step in the corresponding relationship between the preset operating step (the same as the operating step) and the identifications of materials may be different from a name of the operating step in the target process list. A name of the operating step in the corresponding relationship between the preset operating step (the same as the operating step) and the identifications of the materials is different from a name of the operating step in the target process list, for example, for an operating step of binding an IC in the preparation of a display screen, due to different naming rules, two names including "binding IC" and "IC binding" may exist, if the name of the operating step in the material relationship corresponding to each preset operating step is "binding IC", while the name of the operating step in the target process list is "IC binding", then no material will be assigned to the operating step in the target process list.

It should be noted that, the corresponding relationship between the operating step and the identification(s) of the material(s) is not unchanging. Due to such factors as technological development and material cost, the material with a new identification will be used. For the material with a new identification, the corresponding relationship between the identification of the material and the operating step should be added and the material is assigned to the corresponding operating step again.

In the material assignment method provided in an embodiment of the present disclosure, incapability of assigning materials caused by inconsistent process names and/or update of material versions and/or no preset corresponding relationship between the identification of the material and the operating step can be avoided, thereby further ensuring that the materials in the product structure are accurately assigned to each operating step of the target process list, preventing leaked materials, wrong materials or mixed materials, and further improving reliability of material assignment.

It should be noted that, judgment can be performed after materials are assigned to corresponding operating steps as to the conditions of inconsistency of process names and/or whether material versions are updated. When no preset corresponding relationship exists between the identification of the material and the operating step, judgment can be performed in the process of material assignment, and in the process of traversing the product structure, the materials, with the identification of the material in the product structure being different from the identification of the material in the storage structure, are taken as unassigned materials.

Optionally, the material assignment method provided in an embodiment of the present disclosure further includes:
updating the corresponding relationships between preset operating steps and identifications of materials based on the corresponding relationship between the identification of the unassigned material and the corresponding operating step. In this way, the material can be automatically assigned next time according to the updated corresponding relationship between the operating step and the identification of the material, thereby avoiding subsequent wrong automatic material assignment.

To avoid no assignment of materials to an operating step caused by different names of the operating step due to naming rules, optionally, each operating step comprises a site of the operating step in a production line; and each corresponding relationship between a preset operating step and an identification of a material comprises a corresponding relationship between a site of the preset operating step in the production line and the identification of the material.

Said determining in sequence corresponding relationships between the respective operating steps in the target process list and identifications of materials based on a set sequence and according to the target process list associated with the product structure and corresponding relationships between preset operating steps and identifications of materials in step S1021 includes:
determining in sequence corresponding relationships between sites of the respective operating steps in the target process list in the production line and identifications of materials based on a set sequence and according to the target process list associated with the product structure and corresponding relationships between sites of preset operating steps in the production line and identifications of materials, thereby automatically assigning a material in the product structure to a site of an operating step in the production line corresponding to the material.

In this way, since the name of the site corresponding to the operating step in the production line is definite, materials are automatically assigned to the site corresponding to the operating step in the production line, thereby avoiding no assignment of materials to the operating step caused by different names of the operating step due to the naming rules, and further improving accuracy of automatic material assignment.

In an embodiment of the present disclosure, the production line refers to a production line system, one production line system includes multiple sites, and each site can include one or more devices and can include one or more software systems.

Optionally, the determining a corresponding relationship between a site of an operating step in the target process list in the production line and material(s) according to preset corresponding relationships between sites of the preset operating steps in the production line and materials includes:
comparing a name of the site of the operating step in the target process list in the production line with names of sites of the preset operating steps in the preset corresponding relationships in the production line, and when the name of the site of the operating step in the production line is the same as a name of a site of a preset operating step in a preset corresponding relationship in the production line, determining identification(s) of material(s) corresponding to the site of the operating step in the production line in the process.

The automatically assigning the material in the product structure to the site of the operating step in the production line corresponding to the material according to the determined corresponding relationship between the site of the operating step in the target process list in the production line and the material includes:
when the identification of the material corresponding to the site of the operating step in the process in the production line is the same as the identification of the material in the product structure, assigning all the materials with the identification in the product structure to the operating step of the site in the production line corresponding to the material.

In this way, materials are reinspected subsequently, thereby omitting a reinspection step of unassigned materials caused by inconsistency in the names of the operating step, further simplifying the flow of automatic material assignment, and improving efficiency of automatic material assignment.

Optionally, the determining whether unassigned materials exist in the product structure (i.e., determining whether an indentification of a material in the product structure is not in the initial assignment list) includes:
determining whether the material version in the product structure is updated, if the material version in the product structure is updated, then unassigned materials exist in the product structure; if the material version in the product structure is not updated, then no unassigned materials exist in the product structure; and/or
determining whether preset corresponding relationships exist between identifications of materials in the product structure and sites in the production line, if no preset corresponding relationship exists between identification(s) of at least one material(s) in the product structure and a site in the production line, then unassigned materials exist in the product structure; if preset corresponding relationships exist between identifications of all materials in the product structure and sites in the production line, then no unassigned materials exist in the product structure.

Optionally, the if unassigned materials exist in the product structure, then determining a corresponding operating step of the unassigned materials in the target process list, and adding a corresponding relationship between the identifications of the unassigned materials and the corresponding operating step in the initial assignment list includes:
if unassigned materials exist in the product structure, then determining a site of the corresponding operating step of the unassigned material in the target process list in the production line, and adding a corresponding relationship between the identifications of the unassigned materials and the site of the corresponding operating step in the production line in the initial assignment list.

When the material version in the product structure is updated, if a preset corresponding relationship exists between the identification of the material version and the site of the operating step in the production line, the material of an updated version can be assigned again to the operating step of the corresponding site. When no preset corresponding relationship exists between the identification of the material in the product structure and the site in the production line, the corresponding relationship between the material and the site of the operating step in the production line needs to be added, and the material is assigned to the operating step of the corresponding site. The judgment of whether a preset corresponding relationship exists between the identification of the material in the product structure and the site in the production line can be performed in the process of material assignment. In the process of traversing the product structure, the material, with the identification of the material in the product structure being different from identification of the material in the storage structure, is taken as the unassigned material.

Optionally, the updating the corresponding relationship between the operating step and the identification of the material according to the corresponding relationship between the unassigned material and the operating step specifically includes: updating the corresponding relationship between the site of the preset operating step in the production line and the material according to the corresponding relationship between the unassigned material and the site of the operating step in the production line.

In this way, materials can be automatically assigned next time according to the updated corresponding relationship between the site of the preset operating step in the production line and the material, thereby avoiding subsequent wrong automatic material assignment.

It should be noted that, in the material assignment method provided in an embodiment of the present invention, the product structure can be a bill of material (BOM). The bill of material can for example include: number of material, amount of material, material cost, replaceability of material, and whether transferring enterprise resource planning (ERP), etc. The number of material includes the recognizable identification of material. The target process list includes: a process, operating steps in the process, the tools, equipment, jigs, personnel, operating steps, and materials, etc., required in each of the operating steps, and process file information needing to be referred to during process operations. According to the acquired product structure and the target process list associated with the product structure, materials needing to be assigned to each operating step when the product is manufactured are automatically generated according to a preset rule, to generate the material assignment process list of the product, that is, to generate the process list of SOP. The target process list includes: processes, operating steps, product sites, equipment, tools, jigs, materials, personnel, labor-hour, etc.

Optionally, in the material assignment method provided in an embodiment of the present disclosure, the acquiring the target process list associated with the product structure in step S101 specifically includes:
acquiring manufacturing resources and process files;
creating an initial process list comprising process information and operating step information required for manufacturing the product; and
associating the product structure, the process file and the manufacturing resources to the initial process list, to obtain the target process list.

The process information is composed of the operating step information of all the operating steps making up the process, and the operating step information refers to such information as tools, equipment, jigs, personnel, operating steps, and materials, etc., required in the operating step.

It should be noted that, the material assignment process list obtained after performing material assignment on the target process list is subsequently configured to generate a standard operating procedure for guiding product production, therefore, the initial process list is only meaningful when being associated with product structure, so the created initial process list should be associated with product structure, and the product structure can be associated to the manufacturing target of the initial process list, to represent the process required to produce the product. Before material assignment is performed on the target process list subsequently, a step of judging whether a target process list is associated with the product structure is added, to ensure that the generated standard operating procedure can be configured to guide product production. Process files associated with the initial process list can include such guiding files as guidelines and process resources including tooling and jigs, and the process files can be associated with the initial process list, the processes or the operating steps.

Optionally, after step S103, the material assignment method provided in an embodiment of the present disclosure further includes:
distributing the standard operating procedure to the production line, and simultaneously distributing the materials to the production line according to the standard operating procedure.

Optionally, after distributing the materials to the production line according to the standard operating procedure, the method further includes: determining whether the materials distributed to the production line are consistent with materials requisitioned in the production line by scanning a two-dimensional code of the materials distributed to the production line.

For example, the materials and the SOP can be distributed to a manufacturing execution system (MES), the MES at least includes an MES software system and a hardware device (an MES device for short) executing the software system. The hardware device at least includes a processing device capable of processing data and a display device, and can be configured to display the SOP transmitted to the MES all-in-one machine, and simultaneously display the materials distributed together with the SOP, and check the materials requisitioned by the operating personnel, to prevent wrong material requisitioning and to guide production. The MES searches whether a corresponding relationship exists between the distributed SOP and the mass production project in the MES according to product number, if a corresponding relationship exists between the SOP and the mass production project, then the material is distributed to the production line together with the SOP, and the SOP provides guidance to the operating personnel on the production line. Moreover, the corresponding SOP is displayed on the station of the operating personnel on the production line by utilizing the MES. Since the SOP contains material information, the operating personnel can check the distributed materials and the requisitioned materials according to the SOP, thereby preventing fool-proofing and wrong material requisitioning.

Optionally, before distributing the standard operating procedure to the production line, the method further includes determining the corresponding relationship between the product and the project.

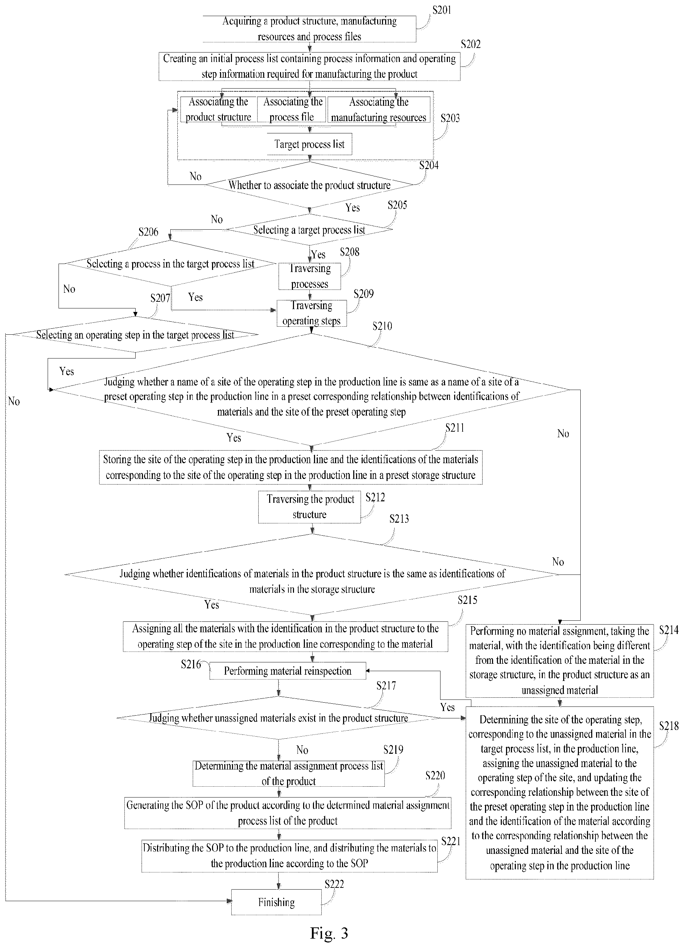

Next, with the material assignment according to the material relationship corresponding to the site of the operating step in the production line and the product structure as an example, the material assignment method provided in an embodiment of the present disclosure is illustrated for description, as shown in Fig. 3, the method includes:
S201, acquiring a product structure, manufacturing resources and process files;
S202, creating an initial process list containing process information and operating step information required for manufacturing the product;
S203, associating the product structure, the process file and the manufacturing resources to the initial process list, to obtain a target process list;
S204, judging whether the target process list is associated with the product structure, if so, then performing step S205, otherwise, associating the product structure again;
S205, judging whether a target process list is selected, if so, performing step S208, otherwise, performing step S206;
S206, judging whether a process in the target process list is selected, if so, then performing step S209, otherwise, performing step S207;
S207, judging whether an operating step in the target process list is selected, if so, then performing the step S210, otherwise, performing step S222;
S208, traversing the processes;
S209, traversing the operating steps;
S210, judging whether a name of a site of the operating step in the production line is the same as a name of a site of a preset operating step in the production line in a preset corresponding relationship between identification(s) of material(s) and the site of the preset operating step, if so, then performing step S211, otherwise, performing step S214;
S211, storing the site of the operating step in the production line and the identification(s) of the material(s) corresponding to the site of the operating step in the production line in a preset storage structure;
S212, traversing the product structure;
S213, judging whether the identification(s) of the material(s) in the product structure is the same as identification(s) of the material(s) in the storage structure, if so, then performing step S215, otherwise, performing step S214;
S214, performing no material assignment, taking the material, with the identification being different from the identification of the material in the storage structure, in the product structure as an unassigned material, to perform step S218;
S215, assigning all the materials with the identification in the product structure to the operating step of the site in the production line corresponding to the material;
S216, performing material reinspection;
S217, judging whether unassigned materials exist in the product structure, if so, then performing step S218, otherwise, then performing step S219;
S218, determining the site of the operating step, corresponding to the unassigned material in the target process list, in the production line, assigning the unassigned material to the operating step of the site, and updating the corresponding relationship between the site of the preset operating step in the production line and the identification of the material according to the corresponding relationship between the unassigned material and the site of the operating step in the production line;
S219, determining the material assignment process list of the product;
S220, generating the SOP of the product according to the determined material assignment process list of the product;
S221, distributing the SOP to the production line, and distributing the materials to the production line according to the SOP; and
S222, finishing.

Based on the same inventive concept, an embodiment of the present disclosure further provides a material assignment system. The system includes a processor; the processor contains a production execution system; when the production execution system is executed by the processor, the following method is performed:
acquiring a product structure and a target process list associated with the product structure, wherein the product structure comprises identifications of materials required for manufacturing a product, and the target process list comprises operating steps of processes required in manufacturing the product;
generating a material assignment process list of the product by automatically obtaining materials required to be assigned to respective operating steps in the processes of manufacturing the product based on a preset rule and according to the product structure and the target process list associated with the product structure; and
generating a standard operating procedure of the product according to the material assignment process list of the product.

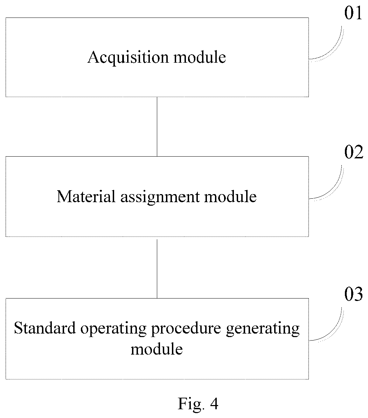

Specifically, as shown in Fig. 4, the production execution system includes:
an acquisition module 01, configured for acquiring a product structure and a target process list associated with the product structure, wherein the product structure comprises identifications of materials required for manufacturing a product, and the target process list comprises operating steps of processes required in manufacturing the product;
a material assignment module 02, configured for generating a material assignment process list of the product by automatically obtaining materials required to be assigned to respective operating steps in the processes of manufacturing the product based on a preset rule and according to the product structure and the target process list associated with the product structure; and
a standard operating procedure generating module 03, configured for generating a standard operating procedure of the product according to the material assignment process list of the product.

Optionally, in the embodiment of the present disclosure, the acquisition module configured for generating a material assignment process list of the product by automatically obtaining materials required to be assigned to respective operating steps in the processes of manufacturing the product based on a preset rule and according to the product structure and the target process list associated with the product structure includes:
determining in sequence corresponding relationships between the respective operating steps in the target process list and identifications of materials based on a set sequence and according to the target process list associated with the product structure and corresponding relationships between preset operating steps and identifications of materials;
taking the corresponding relationships between the respective operating steps in the target process list and identifications of materials as an initial assignment list of the product;
determining whether an identification of any material corresponding to an operating step in the initial assignment list is same as an identification of the any material comprised in the product structure; and
taking the initial assignment list as the material assignment process list of the product in response to that the identification of any material corresponding to an operating step in the initial assignment list is the same as the identification of the any material comprised in the product structure.

Optionally, in the embodiment of the present disclosure, the material assignment process list of the product is generated by updating the initial assignment list in response to that the identification of any material corresponding to an operating step in the initial assignment list is different from the identification of the any material comprised in the product structure.

Optionally, in the embodiment of the present disclosure, after generating the initial assignment list of the product, the method performed by the processor further includes:
determining whether an identification of a material in the product structure is not in the initial assignment list;
determining a corresponding operating step assigning the material in the target process list in response to that the identification of the material in the product structure is not in the initial assignment list; and
generating the material assignment process list of the product by adding a corresponding relationship between the identification of the material and the corresponding operating step in the initial assignment list.

Optionally, in an embodiment of the present disclosure, the method performed by the processor further includes: updating the corresponding relationships between preset operating steps and identifications of materials based on the corresponding relationship between the identification of the material and the corresponding operating step.

Optionally, in the embodiment of the present disclosure, each operating step comprises a site of the operating step in a production line; and each corresponding relationship between a preset operating step and an identification of a material comprises a corresponding relationship between a site of the preset operating step in the production line and the identification of the material.

Said determining in sequence corresponding relationships between the respective operating steps in the target process list and identifications of materials based on a set sequence and according to the target process list associated with the product structure and corresponding relationships between preset operating steps and identifications of materials includes:
determining in sequence corresponding relationships between sites of the respective operating steps in the target process list in the production line and identifications of materials based on a set sequence and according to the target process list associated with the product structure and corresponding relationships between sites of preset operating steps in the production line and identifications of materials, thereby automatically assigning a material in the product structure to a site of an operating step in the production line corresponding to the material.

Optionally, in the embodiment of the present disclosure, the acquiring the product structure and acquiring the target process list associated with the product structure includes:
acquiring manufacturing resources and process files;
creating an initial process list comprising process information and operating step information required for manufacturing the product; and
associating the product structure, the process file and the manufacturing resources to the initial process list, to obtain the target process list.

Optionally, in an embodiment of the present disclosure, the method performed by the processor further includes:
distributing the standard operating procedure to a production line, and distributing the materials to the production line according to the standard operating procedure; and
determining whether the materials distributed to the production line are consistent with materials requisitioned in the production line by scanning a two-dimensional code of the materials distributed to the production line.

The embodiment of the present disclosure further provides a material assignment system which can for example include a first terminal, a file server and an MES.

The first terminal includes: an acquisition module, a material assignment module, and a standard operating procedure generating module.

That is, the first terminal is configured to acquire a target process list, and perform material assignment on the target process list, and generate the SOP.

Optionally, the first terminal further includes:
a project corresponding relationship establishment module, configured to establish a corresponding relationship between a product and a project according to products and projects in the MES;
a file uploading module, configured to upload the generated SOP and the corresponding relationship between the product and the project to the file server; and
a transport module, configured to interact with the MES, for example, to acquire projects in the MES, and transmit the link address of the SOP to the MES.

Of course, the standard operating procedure generating module can further include a storage unit configured to store the generated SOP, for vewing the SOP in the first terminal.

The file server includes:
a receiving module, configured to receive and store the SOP and the corresponding relationship between the product and the project;
a corresponding relationship searching module, configured to search the corresponding relationship between the product and the project; and
a transfer production line module, configured to send the corresponding material to the MES together with the SOP according to the corresponding relationship between the product and the project.

That is, the file server can serve as a transfer production line module.

The MES at least includes an MES all-in-one machine, and the MES all-in-one machine includes:
a receiving module, configured to receive the SOP sent by the file server and the materials distributed along with the SOP, and is further configured to receive the link address of the SOP sent by the first terminal;
a corresponding relationship searching module, configured to search the product and the project in the MES to establish a corresponding relationship between the product and the project;
a transport module, configured to send the corresponding relationship between the product and the project to a first terminal; and
a material display module, configured to display the SOP of the station on the production line, and display the materials distributed along with the SOP, and is further configured to check the materials requisitioned by the operating personnel.

A computer equipment readable storage medium provided in an embodiment of the present disclosure includes a program code, when the program code runs on the computing equipment, the program code is configured to enable the computing equipment to execute the steps of the above material assignment method provided in an embodiment of the present disclosure.

In summary, as to the material assignment method and system and a computer equipment readable storage medium provided in the embodiments of the present embodiment, after acquiring the product structure and the target process list associated with the product structure, materials needing to be assigned to each operating step when the product is manufactured are automatically generated according to a preset rule and according to the acquired product structure and the target process list associated with the product structure, to generate the material assignment process list of the product, and generate the standard operating procedure of the product according to the generated material assignment process list of the product, so as to ensure that the subsequently generated identifications of materials in the standard operating procedure of the product are consistent with the identifications of the materials in the product structure, thereby avoiding the influence of wrong manual material assignment on the production of the production line, improving the efficiency of material assignment, and further improving productivity and manufacturing yield of the product.

Those skilled in the art shall appreciate that the embodiments of the present disclosure can be embodied as a method, a system or a computer program product. Furthermore, the present disclosure can be embodied in the form of a computer program product embodied in one or more computer readable storage media (including but not limited to a disk memory, an optical memory and other hardware equipment) in which computer useable program codes are contained.

Evidently those skilled in the art can make various modifications and variations to the present disclosure without departing from the spirit and scope of the present disclosure. Thus the present disclosure is also intended to encompass these modifications and variations thereto so long as the modifications and variations come into the scope of the claims appended to the present disclosure and their equivalents.

## Claims

1. A material assignment method, performed by computer equipment and comprising:
acquiring a product structure and a target process list associated with the product structure, wherein the product structure comprises identifications of materials required for manufacturing a product, and the target process list comprises operating steps of processes required in manufacturing the product;
generating a material assignment process list of the product by automatically obtaining materials required to be assigned to respective operating steps in the processes of manufacturing the product based on a preset rule and according to the product structure and the target process list associated with the product structure; and
generating a standard operating procedure of the product according to the material assignment process list of the product.

2. The method of claim 1, wherein said generating a material assignment process list of the product by automatically obtaining materials required to be assigned to respective operating steps in the processes of manufacturing the product based on a preset rule and according to the product structure and the target process list associated with the product structure comprises:
determining in sequence corresponding relationships between the respective operating steps in the target process list and identifications of materials based on a set sequence and according to the target process list associated with the product structure and corresponding relationships between preset operating steps and identifications of materials;
taking the corresponding relationships between the respective operating steps in the target process list and identifications of materials as an initial assignment list of the product;
determining whether an identification of any material corresponding to an operating step in the initial assignment list is same as an identification of the any material comprised in the product structure; and
taking the initial assignment list as the material assignment process list of the product in response to that the identification of any material corresponding to an operating step in the initial assignment list is the same as the identification of the any material comprised in the product structure.

3. The method of claim 2, wherein the material assignment process list of the product is generated by updating the initial assignment list in response to that the identification of any material corresponding to an operating step in the initial assignment list is different from the identification of the any material comprised in the product structure.

4. The method of claim 2 or 3, wherein after generating the initial assignment list of the product, the method further comprises:
determining whether an identification of a material in the product structure is not in the initial assignment list;
determining a corresponding operating step assigning the material in the target process list in response to that the identification of the material in the product structure is not in the initial assignment list; and
generating the material assignment process list of the product by adding a corresponding relationship between the identification of the material and the corresponding operating step in the initial assignment list.

5. The method of claim 4, further comprising:
updating the corresponding relationships between preset operating steps and identifications of materials based on the corresponding relationship between the identification of the material and the corresponding operating step.

6. The method of claim 2, wherein each operating step comprises a site of the operating step in a production line; and each corresponding relationship between a preset operating step and an identification of a material comprises a corresponding relationship between a site of the preset operating step in the production line and the identification of the material;
said determining in sequence corresponding relationships between the respective operating steps in the target process list and identifications of materials based on a set sequence and according to the target process list associated with the product structure and corresponding relationships between preset operating steps and identifications of materials comprises:
determining in sequence corresponding relationships between sites of the respective operating steps in the target process list in the production line and identifications of materials based on a set sequence and according to the target process list associated with the product structure and corresponding relationships between sites of preset operating steps in the production line and identifications of materials, thereby automatically assigning a material in the product structure to a site of an operating step in the production line corresponding to the material.

7. The method of claim 1, wherein the acquiring the product structure and the target process list associated with the product structure comprises:
acquiring manufacturing resources and process files;
creating an initial process list comprising process information and operating step information required for manufacturing the product; and
associating the product structure, the process file and the manufacturing resources to the initial process list, to obtain the target process list.

8. The method of claim 1, further comprising:
distributing the standard operating procedure to a production line, and distributing the materials to the production line according to the standard operating procedure; and
determining whether the materials distributed to the production line are consistent with materials requisitioned in the production line by scanning a two-dimensional code of the materials distributed to the production line.

9. A material assignment system comprising computer equipment, wherein the computer equipment is configured for:
acquiring a product structure and a target process list associated with the product structure, wherein the product structure comprises identifications of materials required for manufacturing a product, and the target process list comprises operating steps of processes required in manufacturing the product;
generating a material assignment process list of the product by automatically obtaining materials required to be assigned to respective operating steps in the processes of manufacturing the product based on a preset rule and according to the product structure and the target process list associated with the product structure; and
generating a standard operating procedure of the product according to the material assignment process list of the product.

10. The material assignment system of claim 9, wherein the computer equipment is configured for:
determining in sequence corresponding relationships between the respective operating steps in the target process list and identifications of materials based on a set sequence and according to the target process list associated with the product structure and corresponding relationships between preset operating steps and identifications of materials;
taking the corresponding relationships between the respective operating steps in the target process list and identifications of materials as an initial assignment list of the product;
determining whether an identification of any material corresponding to an operating step in the initial assignment list is same as an identification of the any material comprised in the product structure; and
taking the initial assignment list as the material assignment process list of the product in response to that the identification of any material corresponding to an operating step in the initial assignment list is the same as the identification of the any material comprised in the product structure.

11. The material assignment system of claim 10, wherein the computer equipment is configured for:
generating the material assignment process list of the product by updating the initial assignment list in response to that the identification of any material corresponding to an operating step in the initial assignment list is different from the identification of the any material comprised in the product structure.

12. The material assignment system of claim 10 or 11, wherein the computer equipment is configured for:
determining whether an identification of a material in the product structure is not in the initial assignment list;
determining a corresponding operating step assigning the material in the target process list in response to that the identification of the material in the product structure is not in the initial assignment list; and
generating the material assignment process list of the product by adding a corresponding relationship between the identification of the material and the corresponding operating step in the initial assignment list.

13. The material assignment system of claim 12, wherein the computer equipment is configured for:
updating the corresponding relationships between preset operating steps and identifications of materials based on the corresponding relationship between the identification of the material and the corresponding operating step.

14. The material assignment system of claim 10, wherein the computer equipment is configured for:
each operating step comprises a site of the operating step in a production line; and each corresponding relationship between a preset operating step and an identification of a material comprises a corresponding relationship between a site of the preset operating step in the production line and the identification of the material;
said determining in sequence corresponding relationships between the respective operating steps in the target process list and identifications of materials based on a set sequence and according to the target process list associated with the product structure and corresponding relationships between preset operating steps and identifications of materials comprises:
determining in sequence corresponding relationships between sites of the respective operating steps in the target process list in the production line and identifications of materials based on a set sequence and according to the target process list associated with the product structure and corresponding relationships between sites of preset operating steps in the production line and identifications of materials, thereby automatically assigning a material in the product structure to a site of an operating step in the production line corresponding to the material.

15. The material assignment system of claim 9, wherein the computer equipment is configured for:
acquiring manufacturing resources and process files;
creating an initial process list comprising process information and operating step information required for manufacturing the product; and
associating the product structure, the process file and the manufacturing resources to the initial process list, to obtain the target process list.

16. The material assignment system of claim 9, wherein the computer equipment is configured for:
distributing the standard operating procedure to a production line, and distributing the materials to the production line according to the standard operating procedure; and
determining whether the materials distributed to the production line are consistent with materials requisitioned in the production line by scanning a two-dimensional code of the materials distributed to the production line.

17. A non-transitory computing equipment readable storage medium, wherein the medium is stored with computer program codes, when the program codes run on computing equipment, the program codes are configured to enable the computing equipment to perform the method according to any of claims 1 to 8.
